# EUROPEAN PATENT APPLICATION

(11) **EP 4 440 176 A1**
(43) Date of publication of application: **02.10.2024**
(21) Application number: 21965202.1
(22) Date of filing: 26.11.2021
(51) Int. Cl.: H04W 16/28, H04W 16/26

(54) **BEAM INDICATION METHOD FOR SERVICE LINK OF SMART REPEATER, AND APPARATUS THEREFOR**

(71) Applicant: Beijing Xiaomi Mobile Software Co., Ltd., Beijing 100085 (CN)
(72) Inventor: ZHU, Yajun, Beijing 100085 (CN)
(74) Representative: Gunzelmann, Rainer
(86) International application number: PCT/CN2021/133574
(87) International publication number: WO 2023/092468

(57) **Abstract**

Disclosed in the embodiments of the present disclosure are a beam indication method for a service link of a smart repeater, and an apparatus therefor, which can be applied to the technical field of communications. The method, which is executed by a smart repeater, comprises: receiving a radio resource control (RRC) message, wherein the RRC message is used for configuring, for the smart repeater, information of a beam corresponding to a service link. Therefore, the beam transceiving requirements of a smart repeater, similar to those of a network device, are realized, the reliable use of the smart repeater is guaranteed, conditions are provided for expanding the coverage range of a serving cell, and the reliable transmission of information is also ensured.

## Description

### TECHNICAL FIELD

The present disclosure relates to a field of communication technologies, and particularly to a method and an apparatus for indicating a beam on a service link of a smart repeater.

### BACKGROUND

In a communication system, a smart repeater or a reconfigurable intelligence surface (RIS) is generally adopted to expand a cell coverage. The smart repeater or the RIS is required to be responsible for a feed link, which is also known as a backhaul link, between network devices, and a service link between terminal devices.

In the backhaul link, beam characteristics used by the smart repeater or the RIS are similar to those of the terminal devices. In the service link, the beam characteristics used by the smart repeater or the RIS are similar to those of the network device, and therefore beam forming requirements of the network device need to be satisfied.

### SUMMARY

A method and an apparatus for indicating a beam on a service link of a smart repeater are provided in embodiments of the present disclosure, and are applied to the field of communication technologies.

In a first aspect, a method for indicating a beam on a service link of a smart repeater is provided according to embodiments of the disclosure, and performed by the smart repeater. The method includes: receiving a radio resource control (RRC) message for configuring information of a beam corresponding to the service link for the smart repeater.

In embodiments of the present disclosure, the smart repeater may receive the RRC message for configuring the information of the beam corresponding to the service link from the network device, and communicate with a terminal device based on the configured information of the beam. Therefore, beam transceiving requirements of the smart repeater are achieved to be similar to those of the network device, which not only ensures reliable usage of the smart repeater, provides conditions for expanding a coverage range of a serving cell, but also ensures reliable transmission of information.

The information of the beam includes at least one of:
an identification (ID) of one group of beams;
a plurality of identifications (ID) of a plurality of groups of beams;
an identification (ID) of one beam;
a plurality of identifications (ID) of a plurality of beams;
a periodicity;
a starting position of the beam; or
a temporal characteristic of the beam.

Optionally, the method further includes:
receiving first indication information for triggering or activating at least one of beams configured by the RRC message.

Optionally, the method further includes:
in response to receiving the first indication information via downlink control information (DCI), determining a time domain position after a first number of time units from receiving the DCI as a starting position of the at least one beam;
   or,
in response to receiving the first indication information via a media access control (MAC) control element (CE), determining a time domain position after a second number of time units from sending an acknowledgment signaling to a network device as a starting position of the at least one beam.

Optionally, the method further includes:

Optionally, the method further includes:
determining a value of the first number of time units and a value of the second number of time units according to a protocol agreement and a type of the at least one beam;
   or,
determining a value of the first number of time units and a value of the second number of time units according to an indication of a network device.

Optionally, determining the value of the first number of time units and the value of the second number of time units according to the protocol agreement and the types of the at least one beam includes:
in response to a change in a type of the at least one beam, determining that the value of the first number of time units and the value of the second number of time units are greater than or equal to at least one of following items in a protocol agreement:
a signal processing delay;
a frequency domain conversion delay;
an uplink timing advance delay;
an uplink preparation delay;
an antenna switching delay; or
a beam switching delay.

Optionally, the method further includes:
receiving second indication information, in which the second indication information is configured to indicate a type of the beam used by the smart repeater.

Optionally, the method further includes:
receiving third indication information, in which the first indication information is configured to indicate one or more beams in the at least one beam triggered or activated by the first indication information.

Optionally, each of the first indication information, the second indication information and the third indication information includes at least one of:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

Optionally, the method further includes:
determining a periodicity of a configured beam according to a value of a first predefined parameter in the RRC message.

Optionally, the method further includes:
determining a starting position of a configured beam according to a value of a second predefined parameter in the RRC message.

In a second aspect, another method for indicating a beam on a service link of a smart repeater is provided according to embodiments of the disclosure, and performed by a network device. The method includes: sending a radio resource control (RRC) message to the smart repeater, in which the RRC message is configured to configure information of a beam corresponding to the service link for the smart repeater.

In embodiments of the disclosure, the network device may send the RRC message for configuring the information of the beam corresponding to the service link to the smart repeater, such that the smart repeater may communicate with the terminal device based on the configured information of the beam. Therefore, beam transceiving requirements of the smart repeater are achieved to be similar to those of the network device, which not only ensures reliable usage of the smart repeater, provides conditions for expanding a coverage range of a serving cell, but also ensures reliable transmission of the information.

Optionally, the information of the beam includes at least one of:
an identification (ID) of one group of beams;
a plurality of identifications (ID) of a plurality of groups of beams;
an identification (ID) of one beam;
a plurality of identifications (ID) of a plurality of beams;
a periodicity;
a starting position of the beam; or
a temporal characteristic of the beam.

Optionally, the method further includes:
sending first indication information to the smart repeater, in which the first indication information is configured to trigger or activate at least one of beams configured by the RRC message.

Optionally, the method further includes:
in response to sending the first indication information via downlink control information (DCI), determining a time domain position after a first number of time units from sending the DCI as a starting position of the at least one beam;
   or,
in response to sending the first indication information via a media access control (MAC) control element (CE), determining a time domain position after a second number of time units from receiving an acknowledgment signaling sent by the smart repeater as a starting position of the at least one beam.

Optionally, the method further includes:
determining a value of the first number of time units or a value of the second number of time units according to a protocol agreement and a type of the at least one beam.

Optionally, determining the value of the first number of time units or the value of the second number of time units according to the protocol agreement and the type of the at least one beam includes:
in response to a change in a type of the at least one beam, determining that the value of the first number of time units and the value of the second number of time units are greater than or equal to at least one of following items in a protocol agreement:
a signal processing delay;
a frequency domain conversion delay;
an uplink timing advance delay;
an uplink preparation delay;
an antenna switching delay; or
a beam switching delay.

Optionally, the method further includes:
sending second indication information to the smart repeater, in which the second indication information is configured to indicate the type of the at least one beam used by the smart repeater.

Optionally, the method further includes:
sending third indication information to the smart repeater, in which third first indication information is configured to indicate one or more beams in the at least one beam triggered or activated by the first indication information.

Optionally, the first indication information respectively includes at least one of:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

Optionally, the method further includes:
determining a value of a first predefined parameter in the RRC message according to whether a beam to be configured is a periodic beam.

Optionally, determining the value of the first predefined parameter in the RRC message according to whether the beam to be configured is the periodic beam includes:
determining that the value of the first predefined parameter in the RRC message is a first value in response to the beam to be configured being the periodic beam;
or, determining that the value of the first predefined parameter in the RRC message is a second value in response to the beam to be configured being a non-periodic beam.

Optionally, the method further includes:
determining a value of a second predefined parameter in the RRC message according to a starting position of the beam to be configured.

In a third aspect, a communication apparatus is provided according to embodiments of the present disclosure. The communication apparatus has part of or all functions of the smart repeater for implementing the method as described in the first aspect. For example, the functions of the communication apparatus may possess functions in part of or all of embodiments in the disclosure or may possess functions of any one embodiment in the disclosure independently. The functions may be implemented by hardware, or by executing corresponding software by hardware. The software or hardware includes one or more units or modules corresponding to the above functions.

In a fourth aspect, another communication apparatus is provided according to embodiments of the present disclosure. The communication apparatus has part of or all functions of the network device for implementing the method example as described in the second aspect. For example, the functions of the communication apparatus may possess functions in part of or all embodiments in the disclosure or may possess functions of any one embodiment in the disclosure independently. The functions may be implemented by hardware, or by executing corresponding software by hardware. The software or hardware includes one or more units or modules corresponding to the above functions.

In a fifth aspect, a communication apparatus including a processor is provided according to embodiments of the disclosure. When the processor calls a computer program in the memory, the method according to the first aspect is performed.

In a sixth aspect, a communication apparatus including a processor is provided according to embodiments of the disclosure. When the processor calls a computer program in the memory, the method according to the second aspect is performed.

In a seventh aspect, a communication apparatus including a processor and a memory storing a computer program is provided according to embodiments of the disclosure. The processor is configured to execute the computer program, causing the communication apparatus to perform the method according to the first aspect.

In an eighth aspect, a communication apparatus including a processor and a memory storing a computer program is provided according to embodiments of the disclosure. The processor is configured to execute the computer program, causing the communication apparatus to perform the method according to the second aspect.

In a ninth aspect, a communication apparatus is provided according to embodiments of the disclosure. The communication apparatus includes a processor and an interface circuit. The interface circuit is configured to receive code instructions and transmit the code instructions to the processor; and the processor is configured to run the code instructions so that the apparatus performs the method according to the above first aspect.

In a tenth aspect, a communication apparatus is provided according to embodiments of the disclosure. The communication apparatus includes a processor and an interface circuit. The interface circuit is configured to receive code instructions and transmit the code instructions to the processor; and the processor is configured to run the code instructions so that the apparatus performs the method according to the above second aspect.

In an eleventh aspect, a communication system is provided according to embodiments of the disclosure. The system includes the communication apparatus according to the third aspect and the communication apparatus according to the fourth aspect, or the system includes the communication apparatus according to the fifth aspect and the communication apparatus according to the sixth aspect, or the system includes the communication apparatus according to the seventh aspect and the communication apparatus according to the eighth aspect, or the system includes the communication apparatus according to the ninth aspect and the communication apparatus according to the tenth aspect.

In a twelfth aspect, a computer-readable storage medium is provided according to embodiments of the present disclosure. The computer-readable storage medium is configured to store instructions used for the smart repeater. When the instructions are executed, the method as described in the first aspect is implemented.

In a thirteenth aspect, a computer-readable storage medium is provided according to embodiments of the present disclosure. The computer-readable storage medium is configured to store instructions used for the network device. When the instructions are executed, the method as described in the second aspect is implemented.

In a fourteenth aspect, a computer program product including a computer program is further provided in the present disclosure. The computer program runs on a computer, causing the computer to perform the method according to the first aspect.

In a fifteenth aspect, a computer program product including a computer program is further provided in the present disclosure. The computer program runs on a computer, causing the computer to perform the method according to the second aspect.

In a sixteenth aspect, a system on chip (SoC) is provided in the disclosure. The SoC includes at least one processor and an interface, and is configured to support the smart repeater to implement functions involved in the first aspect, and for example, to determine or process at least one of data and information involved in the above method. In a possible design, the SoC further includes a memory. The memory is configured to save a necessary computer program and data in the smart repeater. The SoC may include a chip, or may include a chip and other discrete devices.

In a seventeenth aspect, a system on chip (SoC) is provided in the disclosure. The SoC includes at least one processor and an interface, and is configured to support a network device to perform functions involved in the second aspect, and for example, to determine or process at least one of data and information involved in the above methods. In a possible design, the SoC further includes a memory. The memory is configured to save a necessary computer program and data of a network device. The SoC may include a chip, or may include a chip and other discrete devices.

In an eighteenth aspect, a computer program is provided in the present disclosure. The computer program runs on a computer, causing the computer to perform the method according to the first aspect.

In a nineteenth aspect, a computer program is provided in the present disclosure. The computer program runs on a computer, causing the computer to perform the method according to the second aspect.

### BRIEF DESCRIPTION OF THE DRAWINGS

In order to explain embodiments of the disclosure or technical solutions in the related art more clearly, the drawings described in the embodiments of the disclosure or required in the related art will be briefly introduced below.
FIG. 1 is an architecture diagram illustrating a communication system according to embodiments of the present disclosure.
FIG. 2 is a flowchart illustrating a method for indicating a beam on a service link of a smart repeater according to an embodiment of the present disclosure.
FIG. 3 is a flowchart illustrating a method for indicating a beam on a service link of a smart repeater according to another embodiment of the present disclosure.
FIG. 4 is a flowchart illustrating a method for indicating a beam on a service link of a smart repeater according to another embodiment of the present disclosure.
FIG. 5 is a flowchart illustrating a method for indicating a beam on a service link of a smart repeater according to another embodiment of the present disclosure.
FIG. 6 is a flowchart illustrating a method for indicating a beam on a service link of a smart repeater according to another embodiment of the present disclosure.
FIG. 7 is a flowchart illustrating a method for indicating a beam on a service link of a smart repeater according to another embodiment of the present disclosure.
FIG. 8 is a flowchart illustrating a method for indicating a beam on a service link of a smart repeater according to another embodiment of the present disclosure.
FIG. 9 is a flowchart illustrating a method for indicating a beam on a service link of a smart repeater according to another embodiment of the present disclosure.
FIG. 10 is a flowchart illustrating a method for indicating a beam on a service link of a smart repeater according to another embodiment of the present disclosure.
FIG. 11 is a flowchart illustrating a method for indicating a beam on a service link of a smart repeater according to another embodiment of the present disclosure.
FIG. 12 is a flowchart illustrating a method for indicating a beam on a service link of a smart repeater according to another embodiment of the present disclosure.
FIG. 13 is a flowchart illustrating a method for indicating a beam on a service link of a smart repeater according to another embodiment of the present disclosure.
FIG. 14 is a structural diagram illustrating a communication apparatus according to an embodiment of the present disclosure.
FIG. 15 is a structural diagram illustrating a communication apparatus according to another embodiment of the present disclosure.
FIG. 16 is a structural diagram illustrating a chip according to an embodiment of the present disclosure.

### DETAILED DESCRIPTION

The example embodiments will be described here, and examples thereof are shown in attached drawings. When the following descriptions refer to the accompanying drawings, same numbers in different drawings represent same or similar elements unless otherwise indicated. The implementations described in the following exemplary embodiments do not represent all implementations consistent with embodiments of the present disclosure. Rather, they are merely examples of apparatuses and methods consistent with some aspects of the disclosure as detailed in the appended claims.

It may be understood that, "a plurality of' in the present disclosure means two or above, which is similar to other quantifiers. "and/or", describes the relationship of the association objects, indicating that there may exist three relationships, for example, A and/or B, may represent: any of existing A only, existing both A and B, or existing B only. The character "/" generally means the contextual object is a kind of "or" relationship. The singular forms "a", "the" and "said are also intended to include plural forms, unless the context clearly indicates otherwise.

For convenience of understanding, terms involved in the disclosure are introduced first.

### 1. Smart Repeater

The smart repeater may be any one network device at least capable of directionally amplifying signals or a terminal device having a function capable of directionally amplifying signals.

### 2. Reconfigurable Intelligence Surface (RIS)

The RIS may be referred to as a "reconfigurable intelligence surface" or an "intelligence reflection surface". Externally, the RIS is a common thin sheet. However, the RIS may be flexibly deployed in a wireless communication propagation environment, and achieve operations on a frequency, a phase, a polarization and other characteristics of a reflected or refracted electromagnetic wave, thus reshaping a wireless channel. Specifically, the RIS may reflect a signal incident on its surface to a specific direction based on a precoding technology, which enhances a signal strength of a receiver and achieves control over a channel.

Since the smart repeater and the RIS have similar characteristics when interacting with a network, the smart repeater refers to as a smart repeater and an RIS in the disclosure.

### 3. Radio Resource Control (RRC)

The RRC, referred to as radio resource management (RRM) or radio resource allocation (RRA), refer to performing wireless resource management, control and scheduling occurred certain strategies and means, and making full use of limited wireless network resources as much as possible on the premise of satisfying requirements of quality of service, to ensure reaching a planned coverage area, and improving a service capacity and a resource utilization as much as possible.

### 4. Medium Access Control (MAC) Control Element (CE)

The MAC CE is a way of exchanging control information between a UE and the network, in addition to an RRC message and a non access stratum (NAS) message. The MAC CE exchanges control information pertaining to a MAC layer.

### 5. Downlink Control Information (DCI)

The DCI is control information related to a physical uplink/downlink shared channel (PUSCH, PDSCH) transmitted on a physical downlink control channel (PDCCH). The DCI includes several related contents such as resource block (RB) allocation information and a modulation manner. The terminal may process PDSCH data or PUSCH data correctly only if the DCI is correctly decoded.

In order to understand a method for indicating a beam on a service link of a smart repeater in embodiments of the disclosure better, a communication system for which embodiments of the present disclosure are applicable is described below.

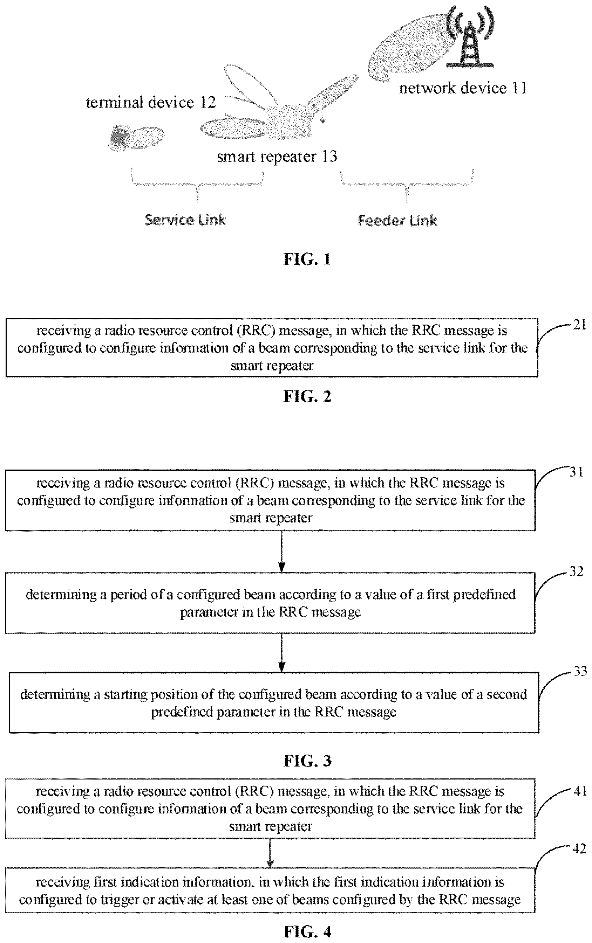

Referring to FIG. 1, FIG. 1 is an architecture diagram illustrating a communication system according to embodiments of the present disclosure. The communication system may include, but is not limited to, one network device, one terminal device and one smart repeater, a number and a form of devices shown in FIG. 1 are only for example and do not constitute a limitation of embodiments of the present disclosure, and two or more network devices, two or more terminal devices and two or more smart repeaters may be included in actual applications. The communication system as illustrated in FIG. 1 includes one network device 11, one terminal device 12 and one smart repeater 13.

It needs to be noted that the technical solution in embodiments of the present disclosure may be applicable for various communication systems. For example, a long term evolution (LTE) system, a 5th generation (5G) mobile communication system, a 5G new radio (NR) system or other future new mobile communication systems.

The network device 11 in embodiments of the disclosure is an entity for transmitting or receiving a signal at a network side. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the present disclosure. The network device according to embodiments of the present disclosure may consist of a central unit (CU) and a distributed unit (DU). The CU may also be referred to as a control unit. Protocol layers of a network device, such as a base station, may be split by using a structure of CU-DU, functions of a part of the protocol layers are placed in the CU for centralized control, and functions of a remaining part or all of the protocol layers are distributed in the DU, and the DU is centrally controlled by the CU.

The terminal device 12 in embodiments of the disclosure is an entity for receiving or transmitting a signal at a user side, for example, is a mobile phone. The terminal device may be referred to as a terminal, a user equipment (UE), a mobile station (MS), a mobile terminal (MT), etc. The terminal device may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart home, etc. A specific technology and a specific device form adopted by the terminal device are not limited in embodiments of the present disclosure.

The smart repeater 13 in embodiments of the disclosure is an entity for transmitting or receiving a signal between the network device and the terminal device. For example, the smart repeater may be a network element, or may be a terminal device having a repeater function, or may be an RIS. A specific technology and a specific device form adopted by the smart repeater device are not limited in embodiments of the present disclosure.

It may be understood that, the communication system described in embodiments of the present disclosure are intended to explain technical solutions of embodiments of the present disclosure more clearly, and does not constitute a limitation to the technical solutions provided by embodiments of the present disclosure. Those skilled in the art know that, with evolution of a system architecture and emergence of a new business scenario, the technical solutions provided in embodiments of the present disclosure are equally applied to similar technical problems.

A method and an apparatus for indicating a beam on a service link of a smart repeater according to the disclosure are described in combination with the accompanying drawings.

Referring to FIG. 2, FIG. 2 is a flowchart illustrating a method for indicating a beam on a service link of a smart repeater according to an embodiment of the present disclosure. The method is performed by the smart repeater. As illustrated in FIG. 2, the method may include, but is not limited to, following steps.

At step 21, a radio resource control (RRC) message is received. The RRC message is configured to configure information of a beam corresponding to the service link for the smart repeater.

It may be understood that, in a backhaul link of the smart repeater, beam characteristics used by the smart repeater are similar to those of a terminal device. In a service link, beam characteristics used by the smart repeater are similar to those of a network device, so that beam forming requirements of the network device need to be satisfied, that is, beam forming of the service link is different from a technology of indicating how the terminal device is beamforming in the related art. Therefore, in the disclosure, the network device configures the information of the beam corresponding to the service link for the smart repeater, so that the smart repeater may communicate with the terminal device based on the information of the beam corresponding to the service link.

Optionally, the information of the beam may include at least one of: an identification (ID) of one group of beams; a plurality of identifications (ID) of a plurality of groups of beams; an identification (ID) of one beam; a plurality of identifications (ID) of a plurality of beams; a periodicity; a starting position of the beam; or a temporal characteristic of the beam.

The ID of the beam may be any one piece of information that may uniquely identify the beam, or may be a transmission configuration indicator (TCI) ID or spatial relation info, or a reference signal ID, etc. For example, the ID of the beam may be indicated by a reference signal. Taking indicating the beam in the DCI for example, one reference signal ID may be included in the DCI to represent one beam ID. The reference signal ID may be a channel state information-reference signal (CSI-RS) resource ID (CRI), a sounding reference signal (SRS) resource ID (SRI) or a synchronization signal (SS) block index (SSBI). Alternatively, the reference signal ID may be configured in the TCI. The DCI includes the TCI, and a reference signal ID corresponding to a type-D quasico-location (QCL) parameter qcl-type-D in the TCI represents the beam ID. The reference signal may be a periodic reference signal, a non-periodic reference signal or a semi-persistent reference signal configured by the RRC, which will not be limited in the present disclosure.

A starting position and a periodicity of the beam may be indicated by a time unit. For example, the starting position of the beam may be a time domain position corresponding to an xth time unit after receiving the RRC message, or a usage periodicity of the beam may be Y time units, which will not be limited in the present disclosure. The time unit may be a slot, a mini-slot, a symbol, etc., which may be agreed in a protocol, which will not be limited in the present disclosure.

An ID of a beam configuration may be an ID when the network device performs the beam configuration on the smart repeater via the RRC. An ID of one beam configuration may correspond to one or more in the following parameter group including an ID of one group of beams, a cycle periodicity of the beams, a starting position of the beams; or, an ID of one beam, a cycle periodicity of the beam, a starting position of the beam; or, an ID of one group of beams, a cycle periodicity of the beams; or, an ID of one beam, a cycle periodicity of the beam; or, an ID of one group of beams.

In addition, a temporal characteristic of the beam is configured to represent that a beam currently configured is a periodic beam, a semi-persistent beam or a non-periodic beam, which will not be limited in the present disclosure.

In embodiments of the disclosure, the smart repeater may receive the RRC message for configuring the information of the beam corresponding to the service link from the network device, and communicate with the terminal device based on the configured information of the beam. Therefore, beam transceiving requirements of the smart repeater are achieved to be similar to those of the network device, which not only ensures reliable usage of the smart repeater, provides conditions for expanding a coverage range of a serving cell, but also ensures reliable transmission of information.

Referring to FIG. 3, FIG. 3 is a flowchart illustrating a method for indicating a beam on a service link of a smart repeater according to an embodiment of the present disclosure. The method is performed by a smart repeater. As illustrated in FIG. 3, the method may include, but is not limited to, following steps.

At step 31, a radio resource control (RRC) message is received. The RRC message is configured to configure information of a beam corresponding to the service link for the smart repeater.

The implementation of step 31 may refer to descriptions of other embodiments in the disclosure, which will not be repeated herein.

At step 32, a periodicity of a configured beam is determined according to a value of a first predefined parameter in the RRC message.

It is noted that, in order to satisfy consistency of different types of beam configurations, a first predefined parameter in the RRC message may be configured to represent a periodicity of the configured beam, so that the smart repeater may, after receiving the RRC message, parse the RRC message to determine the periodicity of the configured beam.

Optionally, when determining that the periodicity of the configured beam is a first value according to the value of the first predefined parameter in the RRC message, it may be determined that the beam configured by the network device for the service link is a periodic beam, and further the smart repeater may cyclically use the beam based on the periodicity corresponding to the configured beam.

Alternatively, when determining that the periodicity of the configured beam is a second value according to the value of the first predefined parameter in the RRC message, it may be determined that the configured beam is a non-periodic beam.

The first value and the second value may be configured as required, and a value of the first value is different from a value of the second value. For example, the first value is an actual periodicity value, and the second value is 0, or the second value is NULL, which will not be limited in the present disclosure.

It may be understood that, for the non-periodic beam, the RRC message may not include a periodicity corresponding to the non-periodic beam.

However, in order to ensure consistency of the ID of the beam configuration, a first predefined parameter value corresponding to the non-periodic beam may be set to the second value.

It is noted that, when the RRC message includes one beam, a value of the first predefined parameter is one. When the RRC message includes a plurality of beams, the value of the first predefined parameter may be one or more, that is, values of first predefined parameters corresponding to the plurality of beams may be same or different, which will not be limited in the present disclosure.

At step 33, a starting position of the configured beam is determined according to a value of a second predefined parameter in the RRC message.

It may be understood that, for a periodic beam cycle and a periodic fixed beam, the RRC message sent from the network device may include a starting position corresponding to each beam. For a semi-persistent beam cycle, a semi-persistent fixed beam indication, a dynamic beam cycle and a dynamic beam indication, the RRC message may not include the starting periodicity corresponding to the beam. However, in order to ensure consistency of beam configurations, in the disclosure, the value of the second predefined parameter in the RRC message may be configured to represent the starting position of the configured beam.

Optionally, the value of the second predefined parameter may be initial positions of the periodic beam cycle and the periodic fixed beam, or may be 0 or null, which will not be limited in the present disclosure.

It is noted that, when the RRC message includes one beam, there is one value of the second predefined parameter. When the RRC message includes the plurality of beams, there may be one or more values of the second predefined parameter, that is, values of the first predefined parameters corresponding to the plurality of beams may be same or different, which will not be limited in the present disclosure.

That is, for the periodic beam cycle, information of the beam configured by the RRC message at least includes an identification (ID), a periodicity and a starting position of one group of beams. For the periodic fixed beam indication, the information of the beam configured by the RRC message at least includes an identification (ID), a periodicity and a starting position of one beam.

Alternatively, for the semi-persistent beam cycle, the information of the beam configured by the RRC message at least includes an identification (ID) and a periodicity of one group of beams. For the semi-persistent fixed beam indication, the information of the beam configured by the RRC message at least includes an identification (ID) and a periodicity of one beam. Alternatively, for the dynamic beam cycle and the dynamic beam indication, the information of the beam configured by the RRC message at least includes an identification (ID) of one group of beams.

In embodiments of the disclosure, the smart repeater receives the RRC message for configuring the information of the beam corresponding to the service link from the network device first, and then determines the periodicity of the configured beam according to the value of the first predefined parameter in the RRC message, and determines the starting position of the configured beam according to the value of the second predefined parameter in the RRC message. Therefore, the smart repeater may achieve beam transceiving requirements of the smart repeater similar to the network device according to the periodicity and the starting position of the beam, which not only ensures reliable usage of the smart repeater, provides conditions for expanding a coverage range of a serving cell, but also ensures reliable transmission of information.

Referring to FIG. 4, taking a scene of a semi-persistent beam cycle and a semi-persistent fixed beam indication for example, a method for indicating a beam on a service link of a smart repeater in the disclosure is illustrated. FIG. 4 is a flowchart illustrating a method for indicating a beam on a service link of a smart repeater according to an embodiment of the present disclosure. The method is performed by a smart repeater. As illustrated in FIG. 4, the method may include, but is not limited to, following steps.

At step 41, a radio resource control (RRC) message is received. The RRC message is configured to configure information of a beam corresponding to the service link for the smart repeater.

The implementation of step 41 may refer to descriptions of other embodiments in the disclosure, which will not be repeated here.

At step 42, first indication information is received. The first indication information is configured to trigger or activate at least one of beams configured by the RRC message.

It may be understood that, for the semi-persistent beam cycle and the semi-persistent fixed beam indication, information of the beam configured by the RRC message does not include a starting time corresponding to each beam. Therefore, the at least one of beams configured by the RRC message may be triggered or activated based on the first indication information, and further the beam activated or triggered may be sent to the terminal device, to ensure communication with the terminal device.

Optionally, the first indication information may include at least one of:
an identification (ID) of a beam configuration;
a plurality of identifications (ID) of a plurality of groups of beams;
an identification (ID) of one group of beams; or
a plurality of identifications (ID) of a plurality of beams; or an identification (ID) of one beam.

Optionally, the network device may send the first indication information to the smart repeater via a DCI, or may send the first indication information to the smart repeater via a MAC CE, which will not be limited in the present disclosure.

Optionally, when the smart repeater is the network device, the smart repeater may receive the first indication information via the DCI.

Alternatively, when the smart repeater is a terminal device having a repeater function, the smart repeater may receive the first indication information via the MAC CE.

It may be understood that, when the smart repeater is a network element, since there is no data transmission in the network element, and a domain used for transmitting data does not need to be indicated, and an overhead of the DCI is small. Therefore, the network device may trigger the at least one beam in beams configured by the RRC message via the DCI, which may save resources and enhance efficiency of the beam configuration.

When the smart repeater is the terminal device having the repeater function, there may be the data transmission in the terminal device having the repeater function. In response to the DCI indicating the at least one beam in the beams configured by the RRC message, it cannot be accurately determined whether the beam is activated, and the overhead of the DCI may be increased. However, since the MAC CE has good extensibility, and the MAC CE has a corresponding acknowledgment signaling that may acknowledge whether the beam is activated, the network device activates at least one of the beams configured by the RRC message via the MAC CE, which may ensure reliable transmission of information.

In embodiments of the disclosure, the smart repeater receives the RRC message for configuring the information of the beam corresponding to the service link for the smart repeater from the network device first, and may communicate with the terminal device based on the at least one beam triggered or activated by the first indication information after receiving the first indication information for triggering or activating at least one of the beams configured by the RRC message from the network device. Therefore, beam transceiving requirements of the smart repeater similar to the network device are achieved, which not only ensures reliable usage of the smart repeater, provides conditions for expanding a coverage range of a serving cell, but also ensures reliable transmission of information.

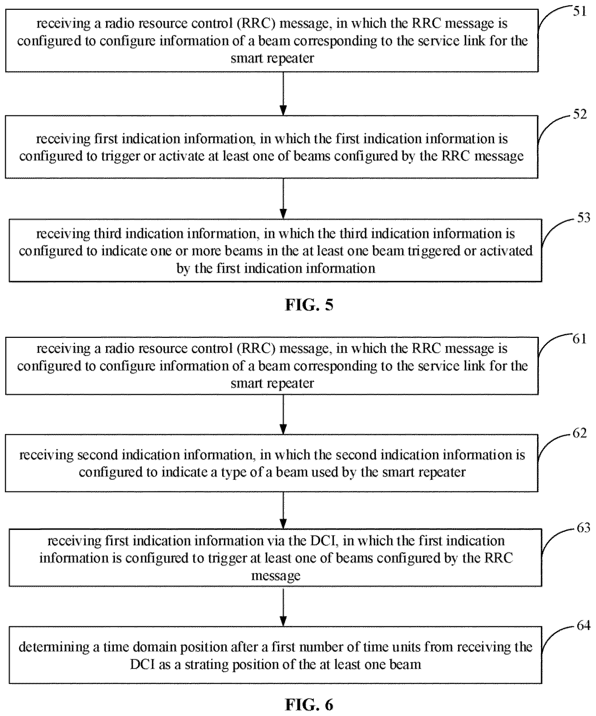

Referring to FIG. 5, taking a scene ofa dynamic beam cycle and a dynamic beam indication for example, a method for indicating a beam on a service link of a smart repeater in the disclosure is illustrated. FIG. 5 is a flowchart illustrating a method for indicating a beam on a service link of a smart repeater according to an embodiment of the present disclosure. The method is performed by a smart repeater. As illustrated in FIG. 5, the method may include, but is not limited to, following steps.

At step 51, a radio resource control (RRC) message is received. The RRC message is configured to configure information of a beam corresponding to the service link for the smart repeater.

At step 52, first indication information is received. The first indication information is configured to trigger or activate at least one of beams configured by the RRC message.

The implementation of step 51 and step 52 may refer to descriptions of other embodiments in the disclosure, which will not be repeated here.

At step 53, third indication information is received. The third indication information is configured to indicate one or more beams in the at least one beam triggered or activated by the first indication information.

It may be understood that, for the dynamic beam cycle and the dynamic beam indication, the RRC message configured by the network device does not include usage time information corresponding to each non-periodic beam. Therefore, the smart repeater requries the third indication message sent by the network device, to trigger one or more beams in the beam configured by the RRC message or the at least one beam that has been activated via the MAC CE, and further sends a triggered beam to the terminal device, to ensure communication with the terminal device.

Optionally, the third indication information may include at least one of:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

Optionally, the smart repeater may receive the third indication information via the DCI.

In embodiments of the disclosure, the smart repeater receives the RRC message for configuring the information of the beam corresponding to the service link from the network device first, receives the first indication information for activating at least one of the beams configured by the RRC message from the network device, and receives the third indication information for indicating one or more beams in at least one beam activated by the first indication information from the network device. Therefore, the smart repeater may communicate with the terminal device according to the beam indicated by the third indication information, to achieve beam transceiving requirements of the smart repeater similar to the network device, which not only ensures reliable usage of the smart repeater, provides conditions for expanding a coverage range of a serving cell, but also ensures reliable transmission of information.

Referring to FIG. 6, FIG. 6 is a flowchart illustrating a method for indicating a beam on a service link of a smart repeater according to an embodiment of the present disclosure. The method is performed by a smart repeater. As illustrated in FIG. 6, the method may include, but is not limited to, following steps.

At step 61, a radio resource control (RRC) message is received. The RRC message is configured to configure information of the beam corresponding to the service link for the smart repeater.

The implementation of step 61 may refer to descriptions of other embodiments in the disclosure, which will not be repeated here.

At step 62, second indication information is received. The second indication information is configured to indicate a type of a beam used by the smart repeater.

Optionally, the second indication information may include at least one of:
time division duplex (TDD) information; or
slot format information.

Optionally, the second indication information may further include:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

Optionally, the type of the beam may include an uplink and a downlink of the beam. The uplink of the beam may include receiving on the service link and sending on a backhaul link. The downlink of the beam may be receiving on the backhaul link and sending on the service link. The smart repeater may determine beam transceiving conditions of two links according to received TDD information.

Optionally, the second indication information may be indicated via a RRC signaling or a dynamic signaling, which will not be limited in the disclosure.

It is noted that the type of the beam used by the smart repeater may be indicated while the network device configures the information of the beam corresponding to the service link for the smart repeater, or may be independently indicated after performing a beam configuration, which will not be limited in the present disclosure.

At step 63, first indication information is received via a DCI. The first indication information is configured to trigger at least one of beams configured by the RRC message.

The implementation of step 63 may refer to descriptions of other embodiments in the disclosure, which will not be repeated here.

At step 64, a time domain position after a first number of time units from receiving the DCI is determined as a starting position of the at least one beam.

The time unit may be a slot, a mini-slot, a symbol, etc., which may be determined according to a protocol, or may be indicated by a network device, which will not be limited in the present disclosure.

Optionally, the smart repeater may determine a value of the first number of time units according to an indication of the network device. Alternatively, the smart repeater may determine a value of the first number of time units according to a protocol agreement and a type of the at least one beam.

Optionally, in response to a change in a type of the at least one beam, it is determined that the value of the first number of time units is greater than or equal to at least one of following items in a protocol agreement:
a signal processing delay;
a frequency domain conversion delay;
an uplink timing advance delay;
an uplink preparation delay;
an antenna switching delay; or
a beam switching delay.

It may be understood that, the smart repeater may determine the starting position of the at least one beam and communicate with the terminal device using the beam according to the starting position of the beam.

In an embodiment of the disclosure, the smart repeater receives the RRC message for configuring the information of the beam corresponding to the service link from the network device first, receives the second indication information for indicating the type of the beam configured by the RRC from the network device, receives the first indication information for activating the at least one beam in the beams configured by the RRC message from the network device, and determines the starting position of the at least beam after the first number of time units receiving receiving the DCI. Therefore, the smart repeater may send the corresponding beam based on the starting position of the beam after determining the starting position of the at least one beam triggered via the DCI, and achieve beam transceiving requirements of the smart repeater similar to the network device, which not only ensures reliable usage of the smart repeater, provides conditions for expanding a coverage range of a serving cell, but also ensures reliable transmission of information.

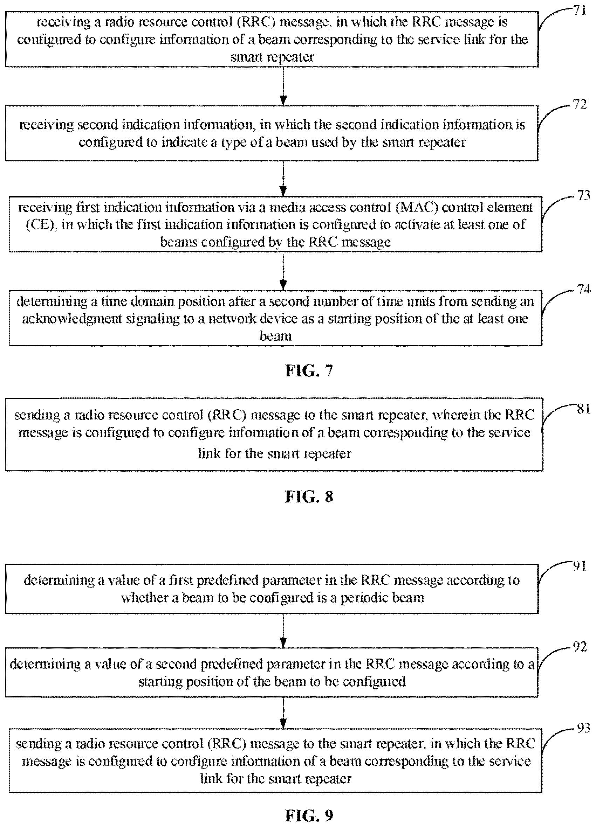

Referring to FIG. 7, FIG. 7 is a flowchart illustrating a method for indicating a beam on a service link of a smart repeater according to an embodiment of the present disclosure. The method is performed by a smart repeater. As illustrated in FIG. 7, the method may include, but is not limited to, following steps.

At step 71, a radio resource control (RRC) message is received. The RRC message is configured to configure information of a beam corresponding to the service link for the smart repeater.

At step 72, second indication information is received. The second indication information is configured to indicate a type of the beam used by the smart repeater.

At step 73, first indication information is received via a media access control (MAC) control element (CE). The first indication information is configured to activate at least one of beams configured by the RRC message.

The implementation of step 71 to step 73 may refer to descriptions of other embodiments in the disclosure, which will not be repeated here.

It needs to be noted that the type of the beam used by the smart repeater may be indicated which the network device configures the information of the beam corresponding to the service link for the smart repeater, or may be independently indicated after performing a beam configuration. Alternatively, the type of the beam may be indicated while the beam is activated for the smart repeater using the MAC CE, or may be separately indicated with the MAC CE, which will not be limited in the present disclosure.

At step 74, a time domain position after a second number of time units from sending an acknowledgment signaling to a network device is determined as a starting position of the at least one beam.

The time unit may be a slot, a mini-slot, a symbol, etc., which may be determined according to a protocol agreement, or may be determined according to an indication of the network device, which will not be limited in the present disclosure.

Optionally, the smart repeater may determine the value of the second number of time units according to the indication of the network device. Alternatively, the smart repeater may determine the value of the second number of time units according to the protocol agreement and the type of the at least one beam.

Optionally, in response to a change in the type of the at least one beam, it is determined that the value of the second number of time units is greater than or equal to at least one of following items in a protocol agreement:
a signal processing delay;
a frequency domain conversion delay;
an uplink timing advance delay;
an uplink preparation delay;
an antenna switching delay; or
a beam switching delay, according to a protocol.

It may be understood that, the smart repeater may determine the time domain position corresponding to a time which is after the second number of time units from sending the acknowledgment signaling to the network device as the starting position of the at least one beam according to the value of the second number of time units after determining the value of the second number of time units, and may further send the corresponding beam at the starting position of the beam.

In embodiments of the disclosure, the smart repeater receives the RRC message for configuring the information of the beam corresponding to the service link from the network device first, receives the second indication information for indicating the type of the at least one beam configured by the RRC from the network device, receives the first indication information for activating the at least one beam in the beams configured by the RRC message from the network device, and determines the time domain position the time which is after the second number of time units from sending the acknowledgment signaling to the network deviceas the starting position of the at least one beam. Therefore, the smart repeater may send the corresponding beam according to the starting position of the beam after determining the starting position of the at least one beam activated via the MAC CE, and achieve beam transceiving requirements of the smart repeater similar to the network device, which not only ensures reliable usage of the smart repeater, provides conditions for expanding a coverage range of a serving cell, but also ensures reliable transmission of information.

Referring to FIG. 8, FIG. 8 is a flowchart illustrating a method for indicating a beam on a service link of a smart repeater according to an embodiment of the present disclosure. The method is performed by a nework device. As illustrated in FIG. 8, the method may include, but is not limited to, following steps.

At step 81, a radio resource control (RRC) message is sent to the smart repeater. The RRC message is configured to configure information of a beam corresponding to the service link for the smart repeater.

It may be understood that, in a backhaul link of the smart repeater, beam characteristics used by the smart repeater are similar to those of a terminal device. In the service link, beam characteristics used by the smart repeater are similar to those of a network device, so that beam forming requirements of a network device is required to be satisfied, that is, beam forming of the service link is different from a technology of indicating how the terminal device is beamforming in the related art. Therefore, in the disclosure, the network device configures the information of the beam corresponding to the service link for the smart repeater, so that the smart repeater may communicate with the terminal device based onon the information of the beam corresponding to the service link.

Optionally, the information of the beam may include at least one of: an identification (ID) of one group of beams; a plurality of identifications (ID) of a plurality of groups of beams; an identification (ID) of one beam; a plurality of identifications (ID) of a plurality of beams; a periodicity; a starting position of the beam; or a temporal characteristic of the beam.

The ID of the beam may be any one piece of information that may uniquely identify the beam, or may be a transmission configuration indicator (TCI) ID or spatial relation info, or a reference signal ID, etc. For example, the ID of the beam may be indicated by a reference signal. Taking indicating the beam in DCI for example, one reference signal ID may be included in the DCI to represent one beam ID. The reference signal ID may be a channel state information-reference signal (CSI-RS) resource ID (CRI), a sounding reference signal (SRS) resource ID (SRI) or a synchronization signal (SS) block index (SSBI). Alternatively, the reference signal ID may be configured in the TCI. The DCI includes the TCI, and a reference signal ID corresponding to a type-D quasico-location (QCL) parameter qcl-type-D in the TCI represents the beam ID. The reference signal may be a periodic reference signal, a non-periodic reference signal or a semi-persistent reference signal configured by the RRC, which will not be limited in the present disclosure.

A starting position and a periodicity of the beam may be indicated by a time unit. For example, the starting position of the beam may be an xth time unit after receiving the RRC indication, or a usage periodicity of the beam may be Y time units, which will not be limited in the present disclosure. The time unit may be a slot, a mini-slot, a symbol, etc., which may be agreed according to a protocol, which will not be limited in the present disclosure.

An ID of the beam configuration may be an ID when the network device performs a beam configuration on the smart repeater via the RRC. An ID of one beam configuration may correspond to one or more in the following parameter group including an ID of one group of beams, a cycle periodicity of the beams, a starting position of the beams; or, an ID of one beam, a cycle periodicity of the beam, a starting position of the beam; or, an ID of one group of beams, a cycle periodicity of the beams; or, an ID of one beam, a cycle periodicity of the beam; or, an ID of one group of beams.

In addition, a temporal characteristic of the beam is configured to represent that a beam currently configured is a periodic beam, a semi-persistent beam or a non-periodic beam, which will not be limited in the present disclosure.

By implementing embodiments of the disclosure, the network device may send the RRC message for configuring the information of the beam corresponding to the service link to the smart repeater, such that the smart repeater may communicate with the terminal device based on the configured information of the beam. Therefore, beam transceiving requirements of the smart repeater are achieved to be similar to those of the network device, which not only ensures reliable usage of the smart repeater, provides conditions for expanding a coverage range of a serving cell, but also ensures reliable transmission of the information.

Referring to FIG. 9, FIG. 9 is a flowchart illustrating a method for indicating a beam on a service link of a smart repeater according to an embodiment of the present disclosure. The method is performed by a network device. As illustrated in FIG. 9, the method may include, but is not limited to, following steps.

At step 91, a value of a first predefined parameter in the RRC message is determined according to whether a beam to be configured is a periodic beam.

It is noted that, in order to satisfy consistency of different types of beam configurations, a first predefined parameter in the RRC message may be configured to represent a periodicity of the configured beam, so that the smart repeater may, after receiving the RRC message, parse the RRC message to determine the periodicity of the configured beam.

Optionally, when the beam to be configured is the periodic beam, it is determined that the value of the first predefined parameter in the RRC message is a first value.

Alternatively, when the beam to be configured is a non-periodic beam, it is determined that the value of the first predefined parameter in the RRC message is a second value.

The first value and the second value may be configured as required, and a value of the first value is different from a value of the second value. For example, the first value is an actual periodicity value, and the second value is 0, or the second value is NULL, which will not be limited in the present disclosure.

It is noted that, when the RRC message includes one beam, there is one value of the first predefined parameter. When the RRC message includes a plurality of beams, there may be one or more values of the first predefined parameter, that is, values of first predefined parameters corresponding to the plurality of beams may be same or different, which will not be limited in the present disclosure.

At step 92, a value of a second predefined parameter in the RRC message is determined according to a starting position of the beam to be configured.

It may be understood that, for the periodic beam cycle and the periodic fixed beam, the RRC message sent from the network device may include a starting position corresponding to each beam. For the semi-persistent beam cycle, the semi-persistent fixed beam indication, the dynamic beam cycle and the dynamic beam indication, the RRC message may not include the starting position corresponding to the beam. However, in order to ensure consistency of beam configurations, in the disclosure, the value of the second predefined parameter in the RRC message may be configured, to represent the starting position of the configured beam.

Optionally, the value of the second predefined parameter may be initial positions of the periodic beam cycle and the periodic fixed beam, or may be 0 or null, which will not be limited in the present disclosure.

It is noted that, when the RRC message includes one beam, there is one value of the second predefined parameter. When the RRC message includes the plurality of beams, there may be one or more values of the second predefined parameter, that is, values of first predefined parameters corresponding to the plurality of beams may be same or different, which will not be limited in the present disclosure.

That is, for the periodic beam cycle, information of the beam configured by the RRC message at least includes an identification (ID), a periodicity and a starting position of one group of beams. For the periodic fixed beam indication, the information of the beam configured by the RRC message at least includes an identification (ID), a periodicity and a starting position of one beam.

Alternatively, for the semi-persistent beam cycle, the information of the beam configured by the RRC message at least includes an identification (ID) and a periodicity of one group of beams. For the semi-persistent fixed beam indication, the information of the beam configured by the RRC message at least includes an identification (ID) and a periodicity of one beam. Alternatively, for the dynamic beam cycle and the dynamic beam indication, the information of the beam configured by the RRC message at least includes an identification (ID) of one group of beams.

At step 93, a radio resource control (RRC) message is sent to the smart repeater. The RRC message is configured to configure information of a beam corresponding to the service link for the smart repeater.

The implementation of step 93 may refer to descriptions of other embodiments in the disclosure, which will not be repeated here.

By implementing embodiments of the disclosure, the network device determines the value of the first predefined parameter in the RRC message according to whether the periodicity of the beam to be configured is the periodic beam, determines the value of the second predefined parameter in the RRC message according to the starting position of the beam to be configured, and sends the RRC message for configuring the information of the beam corresponding to the service link to the smart repeater. Therefore, the smart repeater may achieve beam transceiving requirements of the smart repeater similar to the network device according to the periodicity and the starting position of the beam, which not only ensures reliable usage of the smart repeater, provides conditions for expanding a coverage range of a serving cell, but also ensures reliable transmission of information.

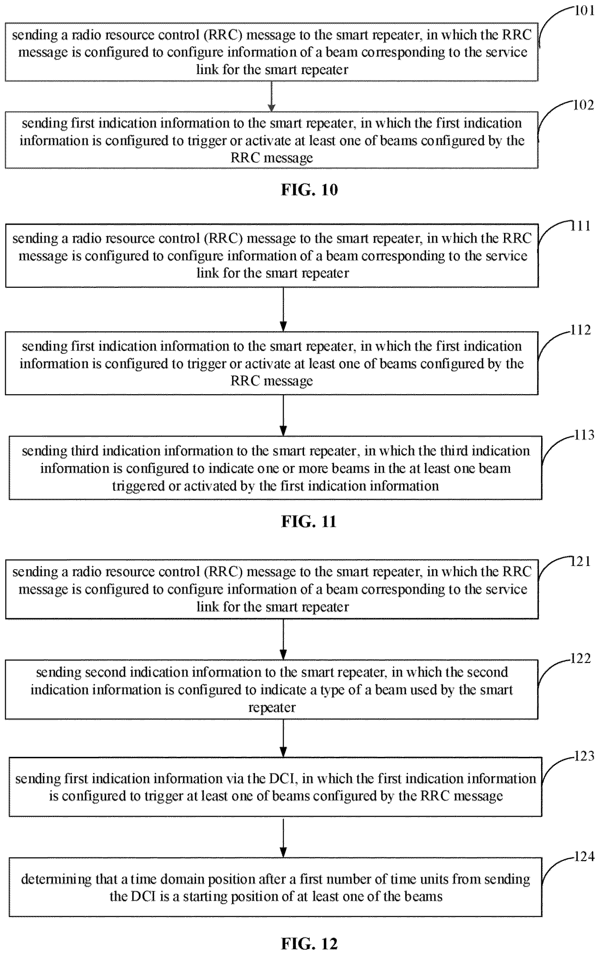

Referring to FIG. 10, taking a scene of a semi-persistent beam cycle and a semi-persistent fixed beam indication for example, a method for indicating a beam on a service link of a smart repeater in the disclosure is illustrated. FIG. 10 is a flowchart illustrating a method for indicating a beam on a service link of a smart repeater according to an embodiment of the present disclosure. The method is performed by a network device. As illustrated in FIG. 10, the method may include, but is not limited to, following steps.

At step 101, a radio resource control (RRC) message is sent to the smart repeater. The RRC message is configured to configure information of a beam corresponding to the service link for the smart repeater.

The implementation of step 101 may refer to descriptions of other embodiments in the disclosure, which will not be repeated here.

At step 102, first indication information is sent to the smart repeater. The first indication information is configured to trigger or activate at least one of beams configured by the RRC message.

It may be understood that, for the semi-persistent beam cycle and the semi-persistent fixed beam indication, information of the beam configured by the RRC message does not include a starting time corresponding to each beam. Therefore, the network device may trigger or activate at least one of the beams configured by the RRC message based on the first indication information, such that the smart repeater may send the beam activated or triggered to the terminal device, to ensure communication with the terminal device.

Optionally, the first indication information may include at least one of:
an identification (ID) of a beam configuration;
a plurality of identifications (ID) of a plurality of groups of beams;
an identification (ID) of one group of beams; or
a plurality of identifications (ID) of a plurality of beams; or an identification (ID) of one beam.

Optionally, the network device may send the first indication information to the smart repeater via a DCI, or may send the first indication information to the smart repeater via a MAC CE, which will not be limited in the present disclosure.

Optionally, when the smart repeater is the network device, the smart repeater may receive the first indication information via the DCI.

Alternatively, when the smart repeater is a terminal device having a repeater function, the smart repeater may receive the first indication information via the MAC CE.

It may be understood that, when the smart repeater is a network element, since there is no data transmission in the network element, and a domain used for transmitting data does not need to be indicated, and an overhead of the DCI is small. Therefore, the network device may trigger the at least one beam in beam configured by the RRC message via the DCI, which may save resources and enhance efficiency of the beam configuration.

When the smart repeater is the terminal device having the repeater function, there may be the data transmission in the terminal device having the repeater function. In response to the DCI indicating the at least one beam in the beams configured by the RRC message, it cannot be accurately determined whether the beam is activated, and the overhead of the DCI may be increased. However, since the MAC CE has good extensibility, and the MAC CE has a corresponding acknowledgement signaling that may determine whether the beam is activated, the network device activates at least one of the beams configured by the RRC message via the MAC CE, which may ensure reliable transmission of information.

In embodiments of the disclosure, the network device may send the RRC message for configuring the information of the beam corresponding to the service link to the smart repeater, and sends the first indication information for triggering or activating at least one of the beams configured by the RRC message to the smart repeater. Therefore, the smart repeater may communicate with the terminal device based on the at least one beam activated or triggered by the first indication information after receiving the first indication information for triggering or activating at least one of the beams configured by the RRC message from the network device, to achieve beam transceiving requirements of the smart repeater similar to the network device, which not only ensures reliable usage of the smart repeater, provides conditions for expanding a coverage range of a serving cell, but also ensures reliable transmission of information.

Referring to FIG. 11, taking a scene of a dynamic beam cycle or a dynamic beam indication for example, a method for indicating a beam on a service link of a smart repeater in the disclosure is illustrated. FIG. 11 is a flowchart illustrating a method for indicating a beam on a service link of a smart repeater according to an embodiment of the present disclosure. The method is performed by a network device. As illustrated in FIG. 11, the method may include but is not limited to following steps.

At step 111, a radio resource control (RRC) message is sent to the smart repeater. The RRC message is configured to configure information of a beam corresponding to the service link for the smart repeater.

At step 112, first indication information is sent to the smart repeater. The first indication information is configured to trigger or activate at least one of beams configured by the RRC message.

The implementation of step 111 and step 112 may refer to descriptions of other embodiments in the disclosure, which will not be repeated here.

At step 113, third indication information is sent to the smart repeater. The third indication information is configured to indicate one or more beams in the at least one beam triggered or activated by the first indication information.

It may be understood that, for the dynamic beam cycle and the dynamic beam indication, the RRC message configured by the network device does not include usage time information corresponding to each non-periodic beam. Therefore, the network device requries to send the third indication information to the smart repeater to trigger one or more beams in the beam configured by the RRC message or the at least one beam that has been activated via the MAC CE, and the smart repeater may further send a triggered beam to the terminal device, to ensure communication with the terminal device.

Optionally, the third indication information may include at least one of:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

Optionally, the network device may send the third indication information via the DCI.

In embodiments of the disclosure, the network device sends the RRC message for configuring the information of the beam corresponding to the service link to the smart repeater first, sends the first indication information for triggering or activating at least one of beams configured by the RRC message to the smart repeater, and sends the third indication information for indicating one or more beams in at least one beam triggered or activated by the first indication information to the smart repeater. Therefore, the smart repeater may communicate with the terminal device according to the beam indicated by the third indication information, to achieve beam transceiving requirements of the smart repeater similar to the network device, which not only ensures reliable usage of the smart repeater, provides conditions for expanding a coverage range of a serving cell, but also ensures reliable transmission of information.

Referring to FIG. 12, FIG. 12 is a flowchart illustrating a method for indicating a beam on a service link of a smart repeater according to an embodiment of the present disclosure. The method is performed by a network device. As illustrated in FIG. 12, the method may include but is not limited to following steps.

At step 121, a radio resource control (RRC) message is sent to the smart repeater. The RRC message is configured to configure information of a beam corresponding to the service link for the smart repeater.

The implementation of step 121 may refer to descriptions of other embodiments in the disclosure, which will not be repeated here.

At step 122, second indication information is sent to the smart repeater. The second indication information is configured to indicate a type of a beam used by the smart repeater.

Optionally, the second indication information may include at least one of:
time division duplex (TDD) information; or
slot format information.

Optionally, the second indication information may further include:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

Optionally, the type of the beam may include an uplink and a downlink of the beam. The uplink of the beam may include receiving on a service link and sending on a backhaul link. The downlink of the beam may be receiving on the backhaul link and sending on the service link.

Optionally, the second indication information may be indicated via an RRC signaling or a dynamic signaling, which will not be limited in the disclosure.

It is noted that the type of the beam used by the smart repeater may be indicated while the network device configures the information of the beam corresponding to the service link for the smart repeater, or may be independently indicated after performing a beam configuration, which will not be limited in the present disclosure.

At step 123, first indication information is sent via a DCI. The first indication information is configured to trigger at least one of beams configured by the RRC message.

The implementation of step 123 may refer to descriptions of other embodiments in the disclosure, which will not be repeated here.

At step 124, it is determined that a time domain position after a first number of time units from sending the DCI is a starting position of at least one of the beams.

The time unit may be a slot, a mini-slot, a symbol, etc., which may be agreed according to a protocol, which will not be limited in the present disclosure.

Optionally, the network device may determine values of the first number of time units according to a protocol and a type of the at least one beam.

Optionally, the network device may send the value of the first number of time units to the smart repeater after determining the value of the first number of time units, so that the smart repeater determines the starting position of the at least one beam according to the value of the first number of time units.

Optionally, in response to a change in a type of the at least one beam, it is determined that the value of the first number of time units are greater than or equal to at least one of following items in a protocol agreement:
a signal processing delay;
a frequency domain conversion delay;
an uplink timing advance delay;
an uplink preparation delay;
an antenna switching delay; or
a beam switching delay.

In the disclosure, the network device may determine states of the smart repeater and the terminal device accurately based on a determined initial position of the service link, and further perform a service scheduling on the smart repeater and the terminal device according to the states of the smart repeater and the terminal device, which effectively avoids scheduling errors.

In embodiments of the disclosure, the network device sends the RRC message for configuring the information of the at least one of the beams corresponding to the service link to the smart repeater first, sends the second indication information for indicating the type of the at least one of the beams configured by the RRC to the smart repeater, sends the first indication information for triggering the at least one of the beams configured by the RRC message to the smart repeater via the DCI, and determines the time domain position after the first number of time units from receiving the DCI as the starting positions of the at least one beam. Therefore, beam transceiving requirements of the smart repeater similar to the network device are achieved, which not only ensures reliable usage of the smart repeater, provides conditions for expanding a coverage range of a serving cell, but also ensures reliable transmission of information.

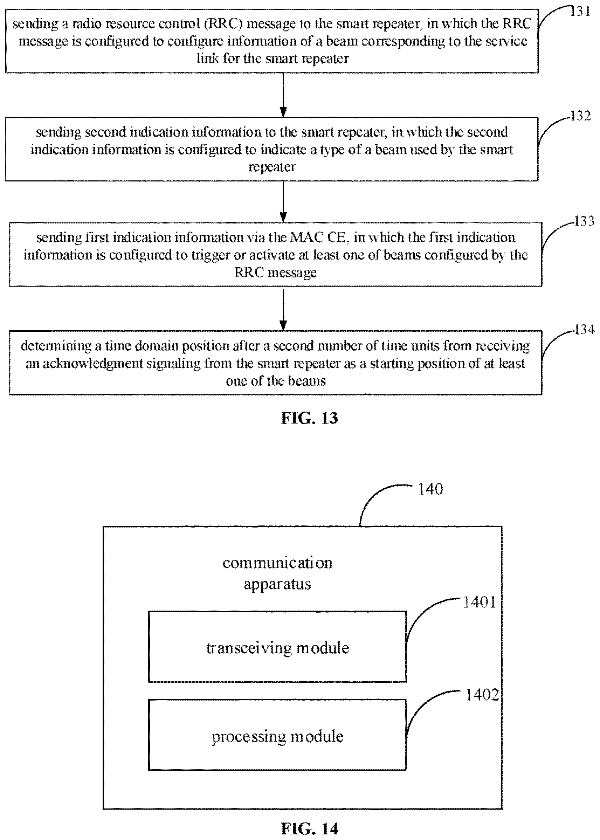

Referring to FIG. 13, FIG. 13 is a flowchart illustrating a method for indicating a beam on a service link of a smart repeater according to an embodiment of the present disclosure. The method is performed by a network device. As illustrated in FIG. 13, the method may include but is not limited to following steps.

At step 131, a radio resource control (RRC) message is sent to the smart repeater. The RRC message is configured to configure information of a beam corresponding to the service link for the smart repeater.

At step 132, second indication information is sent to the smart repeater. The second indication information is configured to indicate a type of a beam used by the smart repeater.

At step 133, first indication information is sent via the MAC CE. The first indication information is configured to trigger or activate at least one of beams configured by the RRC message.

The implementation of step 131 to step 133 may refer to descriptions of other embodiments in the disclosure, which will not be repeated here.

It needs to be noted that the type of the beam used by the smart repeater may be indicated which the network device configures the information of the beam corresponding to the service link for the smart repeater, or may be independently indicated after performing a beam configuration. Alternatively, the type of the beam may be indicated while the beam is activated for the smart repeater using the MAC CE, or may be separately indicated with the MAC CE, which will not be limited in the present disclosure.

At step 134, a time domain position after a second number of time units from receiving an acknowledgment signaling from the smart repeater is determined as a starting position of at least one of the beams.

The time unit may be a slot, a mini-slot, a symbol, etc., which may be determined according to a protocol agreement, or may be determined according to an indication of the network device, which will not be limited in the present disclosure.

Optionally, the network device may determine a value of the second number of time units according to the protocol agreement and the type of the at least one beam.

Optionally, the network device may send the value of the second number of time units to the smart repeater after determining the value of the second number of time units, so that the smart repeater determines the starting position of the at least one beam according to the value of the second number of time units.

Optionally, in response to a change in the type of the at least one beam, it is determined thet the value of the second number of time units is greater than or equal to at least one of following items in a protocol agreement:
a signal processing delay;
a frequency domain conversion delay;
an uplink timing advance delay;
an uplink preparation delay;
an antenna switching delay; or
a beam switching delay.

It may be understood that, the smart repeater may return a acknowledgment signaling corresponding to a MAC CE message after the network device sends the MAC CE message to the smart repeater. The network device may determine the time domain position after the second number of time units from receiving the acknowledgment signaling as the starting position of the at least one beam, and further the network device may send a corresponding beam to the smart repeater at the starting position of the at least one beam.

In embodiments of the disclosure, the network device sends the RRC message for configuring the information of the at least one of the beams corresponding to the service link to the smart repeater first, sends the second indication information for indicating the type of the beam configured by the RRC to the smart repeater, sends the first indication information for triggering the at least one of the beams configured by the RRC message to the smart repeater via the MAC CE, and determines the time domain position after the second number of time units from receiving the acknowledgment signaling from the smart repeater as the starting position of the at least one beam. Therefore, beam transceiving requirements of the smart repeater similar to the network device are achieved, which not only ensures reliable usage of the smart repeater, provides conditions for expanding a coverage range of a serving cell, but also ensures reliable transmission of information.

In embodiments of the disclosure, for a periodic beam cycle, the method may be implemented as follows.

On a service link, for example, the periodic beam cycle is configured to broadcast a system message and transmit a periodic reference signal, and a beam indication may be completed by a network device configuring one or more groups of periodic beams for a smart repeater. Specific configuration parameters at least include an ID of one group of beams, a periodicity and a starting position of the beams. The ID of the beam may be indicated via one reference signal ID, and the reference signal may correspond to a certain existing reference signal ID based on QCL. The network device may configure information of the beam corresponding to the service link for the smart repeater via a RRC signaling. That is, the network device may send an RRC message to the smart repeater. The RRC message is configured to configure information of the beam corresponding to the service link for the smart repeater. The information of the beam at least includes the ID of one group of beams, the periodicity and the starting position.

On a backhaul link, the periodic beam cycle is mainly configured for beam scanning of the network device at a smart repeater side, and a beam indication may be completed by the network device configuring one or more groups of periodic reference signals for the smart repeater. Specific configuration parameters at least include a time frequency position of one group of reference signals, a periodicity and a starting position. The network device may configure parameters for the smart repeater via the RRC signaling.

Optionally, in a service link part, one group of periodic beam cycles are configured for the smart repeater via the RRC signaling. One group of configured specific configuration parameters at least include the ID of one group of beams, the periodicity and the starting position of the beam. The ID of the beam may be indicated by any one existing reference signal ID which is determined based on QCL. That is, the reference signal ID may be configured in a TCI. A DCI includes the TCI. Thereference signal ID corresponding to a type-D quasico-location (QCL) parameter qcl-type-D in the TCI represents the ID of the beam.

In embodiments of the disclosure, for a periodic fixed beam indication, the method may be implemented as follows.

On a service link, for example, the periodic fixed beam indication is configured to receive a fixed uplink data service (configured grant type-1), and a beam indication is completed by a network configuring one or more groups of periodic beams for a smart repeater. One group of configured specific configuration parameters at least include an ID of one beam, a periodicity and a starting position of the beam. The ID of the beam may be indicated by any one existing reference signal ID which is determined based on QCL.

That is, the network device sends a RRC message to the smart repeater. The RRC message is configured to configure information of the beam corresponding to the service link for the smart repeater. Information of the beam at least includes an ID of one beam, a periodicity and a starting position of the beam.

On a backhaul link, since the smart repeater itself does not generate services, and does not have mobility, the smart repeater may keep a beam selected by the network device to maintain the backhual link without external interferences.

In embodiments of the disclosure, for a semi-persistent beam cycle, the method may be implemented as follows.

On a service link, for example, the semi-persistent beam cycle is configured to send a semi-persistent reference signal, and a beam indication may be completed by the network device configuring one or more groups of periodic beams for the smart repeater and triggering an MAC CE/DCI. Specific parameters of a RRC at least include an ID of one group of beams and a periodicity. Then, the network device may send first indication information to the smart repeater. The first indication information is configured to trigger or activate at least one of beams configured in a RRC message. Optionally, the network device may send the first indication information to the smart repeater via the MAC CE or the DCI. The smart repeater sends the reference signal after receiving the first indication information. When the smart repeater is configured with a plurality of groups of periodic beams, the first indication information includes an indication of one or more groups of periodic beams.

That is, the network device sends the RRC message to the smart repeater. The RRC message is configured to configure the information of the beam corresponding to the service link for the smart repeater. The beam information at least includes the ID of one group of beams and the periodicity. Then, the network device may send the first indication information to the smart repeater via the MAC CE or the DCI. The first indication information is configured to trigger or activate at least one of beams configured in a RRC message.

Optionally, when the smart repeater is a terminal device having a repeater function, the network device may send the first indication information to the smart repeater via the MAC CE.

Optionally, when the smart repeater is a network element, since there is no data transmission in the network element, and a domain used for transmitting data does not need to be indicated, an overhead of the DCI is small. Therefore, the network device may trigger at least one of beams configured by the RRC message via the DCI, which may save resources and enhance efficiency of configuring the beam.

In embodiments of the disclosure, for a semi-persistent fixed beam indication, the method may be implemented as follows.

On a service link, for example, the semi-persistent fixed beam indication is configured for a semi-persistent service to send a physical downlink shared channel (PDSCH) for semi-persistent scheduling (SPS), and is configured for the semi-persistent service to receive a CG type-2. A beam indication may be provided by a network device first configuring one or more groups of periodic beams for the smart repeater via a RRC message and then sending first indication information to the smart repeater via an MAC CE or a DCI to trigger or activate at least one of beams configured in the RRC message. Information of the beam included in the RRC message at least includes an ID of one beam and a periodicity. The smart repeater sends a reference signal after receiving the first indication information from the network device. When the smart repeater is configured with a plurality of groups of periodic beams, the first indication information sent via the MAC CE or DCI at least includes an indication of one or more groups of periodic beams.

That is, the network device sends the RRC message to the smart repeater first. The RRC message is configured to configure the information of the beam corresponding to the service link for the smart repeater. The information of the beam at least includes the ID of one beam and the periodicity. Then, the network device may send the first indication information to the smart repeater via the MAC CE or the DCI. The first indication information is configured to trigger or activate at least one of the beams configured by the RRC message.

Optionally, when the smart repeater is a terminal device having a repeater function, the network device may send the first indication information to the smart repeater via the MAC CE.

Optionally, when the smart repeater is a network element, since there is no data transmission in the network element, and a domain used for transmitting data does not need to be indicated, an overhead of the DCI is small. Therefore, the network device may trigger at least one beam in the beams configured by the RRC message via the DCI, which may save resources and enhance efficiency of configuring the beam.

In embodiments of the disclosure, for a dynamic beam cycle, the method may be implemented as follows.

On a service link, for example, the dynamic beam cycle is configured to send a non-periodic channel state information resource config (CSI-RS) (beam cycle), and the beam indication may be providing by a network device configuring one or more groups of beams for the smart repeater via a RRC message first, or sending first indication information via an MAC CE to activate at least one beam, and then sending third indication information to the smart repeater to indicate one or more beams in the at least one beam activated by the MAC CE. Optionally, the network device may send the third indication information to the smart repeater via the DCI. The smart repeater sends a corresponding beam according to beam information indicated by the third indication information after receiving the third indication information.

That is, the network device sends the RRC message to the smart repeater. The RRC message is configured to configure the information of the beam corresponding to the service link for the smart repeater. The beam information at least includes an ID of one group of beams. Then, the network device may send the first indication information to the smart repeater via the MAC CE. The first indication information is configured to trigger or activate at least one of beams configured by the RRC message. Then, the network device sends the third indication information to the smart repeater via the DCI. The third indication information is configured to indicate one or more beams in the at least one beam activated by the MAC CE.

In embodiments of the disclosure, for a dynamic beam indication, the method may be implemented as follows.

On a service link, the dynamic beam indication is configured for dynamic service scheduling or a non-periodic CSI-RS (fixed beam), and the beam indication may be provided by a network device configuring one or more groups of beams for a smart repeater via a RRC message first, or sending first indication information via an MAC CE to activate at least one beam, and then t sending third indication information to the smart repeater via a DCI, to trigger at least one of the beams configured by the RRC message or one or more beams in the at least one beam activated via the MAC CE. The smart repeater sends a corresponding beam according to the information of the beam indicated by the third indication information after receiving the third indication information.

That is, the network device sends the RRC message to the smart repeater. The RRC message is configured to configure the information of the beam corresponding to the service link for the smart repeater. The beam information at least includes an ID of one group of beams. Then, the network device may send the first indication information to the smart repeater via the MAC CE. The first indication information is configured to trigger or activate at least one of the beams configured by the RRC message. Then, the network device sends the third indication information to the smart repeater via the DCI. The third indication information is configured to indicate one or more beams in the at least one beam activated by the MAC CE.

In embodiments of the disclosure, for a beam configuration on the service link of the smart repeater, the RRC may configure for each beam configuration with one or more of following parameters: (1) an identification (ID) of one group of beams/one beam, a periodicity and a starting position; (2) an ID of one group of beams/one beam, and a periodicity; or (3) an ID of one group of beams. The information of the beam may include at least one of: an ID of one group of beams; a plurality of IDs of a plurality of groups of beams; an ID of one beam; a plurality of IDs of a plurality of beams; a periodicity; a starting position of the beam; or a temporal characteristic of the beam.

In embodiments of the disclosure, the MAC CE may active one beam configuration, and a specific content of which is beam configuration ID. The MAC CE may active one or part of beams in one group of beams in the one beam configuration, the specific content of which is beam configuration ID, and beam ID.

In embodiments of the disclosure, the DCI may trigger one beam configuration, and the specific content of which is the beam configuration ID. The DCI may further trigger one beam in one group of beams in the one beam configuration, and the specific content of which is the beam configuration ID and the beam ID. The DCI may trigger one beam in at least one beam activated by the MAC CE, and the specific content of which is the beam ID.

In embodiments of the present disclosure, in order to satisfy consistency of different types of beam configurations, it may be indicated that there is no periodicity by setting the periodicity to NULL, and it may be indicated that there is no starting position by setting a starting position related parameter to NULL, so that the beam configuration of the RRC message may be unified.

In embodiments of the present disclosure, a duration of continuously using each beam in the RRC configuration is, by default, one time unit, such as one slot or one symbol. The smart repeater uses each beam in sequence according to an occurrence order of beam IDs; or may indicate the periodicity in the RRC message. In case of indicating the periodicity, the smart repeater uses beams in sequence according to a specified periodicity. Alternatively, in a case that the network device only configures one group of beam configurations for the smart repeater, the beam configuration ID may be omitted.

Optionally, in the RRC configuration, the temporal characteristic of the beam, for example, a periodic beam, a semi-persistent beam or a non-periodic beam, may be further added to indicate the temporal characteristic of the beam, and further to indicate behaviors of the smart repeater using the beam.

It needs to be noted that, the beam indication in the disclosure does not distinguish between sending or receiving. For whether a beamformed beam is used to be sent or received, the network device may send second indication information to the smart repeater, to indicate a type of the beam used by the smart repeater. The second indication information may include TDD information and slot format information. The network device may indicate sending the second indication information via an RRC signaling or a dynamic signaling. Optionally, the type of the beam may include an uplink and a downlink. The uplink may correspond to receiving on the service link or sending on the backhaul link; and the downlink may correspond to receiving on the backhaul link or sending on the service link.

In embodiments of the disclosure, when a certain beam or one group of beams is activated by the MAC CE, the time domain position after the second number of time units from feeding back an ack signaling to the network device by the smart repeater are a starting position of the beam. The smart repeater may determine a value of the second number of time units according to an indication of the network device. Alternatively, the smart repeater may determine the value of the second number of time units according to a protocol agreement and a type of the at least one beam.

In embodiments of the disclosure, when at least one of the beams configured by the RRC message is triggered by the DCI, the smart repeater may start to send at a time domain position which is after the first number of time units from receiving the signaling. The smart repeater may determine a value of the first number of time units according to an indication of the network device or the protocol agreement. The first number of time units at least include a beam switching time and an uplink transmission preparation time of the smart repeater. The smart repeater starts to send at a time after M slots from feeding back an ack signaling for the DCI to the network device by the smart repeater. The smart repeater may determine the value of the first number of time units according to an indication of the network device or the protocol agreement. The M slots at least include yhe beam switching time of the smart repeater.

Optionally, in a case that the type of the beam is the uplink (receiving on the service link or sending on the backhaul link), the value of the first number of time units and the value of the second number of time units at least include a beam switching time and an uplink transmission preparation time on the service link.

Optionally, in a case that the type of the beam is the downlink (receiving on the backhaul link, or sending on the service link), the value of the first number of time units and the value of the second number of time units at least include a beam switching time on the service link.

In embodiments provided in the disclosure, methods provided in embodiments of the present disclosure are introduced from perspectives of the network device and the terminal device respectively. To achieve various functions in the methods provided in embodiments of the disclosure, the network device and the terminal device may include a hardware structure and a software module, to achieve the above functions in the form of the hardware structure, the software module or a combination of the hardware structure and the software module. A certain function in the above functions may be performed by the hardware structure, the software module or a combination of the hardware structure and the software module.

Referring to FIG. 14, FIG. 14 is a structural diagram illustrating a communication apparatus 140 according to embodiments of the present disclosure. The communication apparatus 140 as illustrated in FIG. 14 may include a processing module 1401 and a transceiving module 1402.

The transceiving module 1402 may include a transmitting module and/or a receiving module. The transmitting module is configured to implement a transmitting function, the receiving module is configured to implement a receiving function, and the transceiving module 1402 may implement the transmitting function and/or the receiving function.

It is understood that the communication apparatus 140 may be a terminal device, an apparatus in the smart repeater, or an apparatus capable of being used with the smart repeater.

The communication apparatus 140 is at a smart repeater side. The apparatus 140 includes a transceiving module 1402.

The transceiving module 1402 is configured to receive a radio resource control (RRC) message. The RRC message is configured to configure information of a beam corresponding to the service link for the smart repeater.

Optionally, the information of the beam includes at least one of:
an identification (ID) of one group of beams;
a plurality of identifications (ID) of a plurality of groups of beams;
an identification (ID) of one beam;
a plurality of identifications (ID) of a plurality of beams;
a periodicity;
a starting position of the beam; or
a temporal characteristic of the beam.

Optionally, the transceiving module 1402 is further specifically configured to:
receive first indication information. The first indication information is configured to trigger or activate at least one of beams configured by the RRC message.

Optionally, the processing module 1402 is specifically configured to:
in response to receiving the first indication information via downlink control information (DCI), determining a time domain position after a first number of time units from receiving the DCI as a starting position of the at least one beam;
   or,
in response to receiving the first indication information via a media access control (MAC) control element (CE), determining a time domain position after a second number of time units from sending an acknowledgment signaling to a network device as a starting position of the at least one beam.

Optionally, the processing module 1402 is further specifically configured to:
determine a value of the first number of time units and a value of the second number of time units according to a protocol agreement and a type of the at least one beam;
   or,
determine a value of the first number of time units and a value of the second number of time units according to an indication of a network device.

Optionally, the processing module 1402 is specifically configured to:
in response to a change in a type of the at least one beam, determine that the value of the first number of time units and the value of the second number of time units are greater than or equal to at least one of following items in a protocol agreement:
a signal processing delay;
a frequency domain conversion delay;
an uplink timing advance delay;
an uplink preparation delay;
an antenna switching delay; or
a beam switching delay.

Optionally, the transceiving module 1402 is further specifically configured to:
receive second indication information. The second indication information is configured to indicate a type of a beam used by the smart repeater.

Optionally, the transceiving module 1402 is further specifically configured to:
receive third indication information. The third indication information is configured to indicate one or more beams in the at least one beam triggered or activated by the first indication information.

Optionally, each of the first indication information, the second indication information and the third indication information includes at least one of:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

Optionally, the processing module 1402 is further specifically configured to:
determine a periodicity of a configured beam according to a value of a first predefined parameter in the RRC message.

Optionally, the processing module 1402 is further specifically configured to: determine a starting position of the configured beam according to a value of a second predefined parameter in the RRC message.

In the communication apparatus in the disclosure, the smart repeater may receive the RRC message for configuring the information of the beam corresponding to the service link from the network device, and communicate with a terminal device based on the configured information of the beam. Therefore, beam transceiving requirements of the smart repeater are achieved to be similar to those of the network device, which not only ensures reliable usage of the smart repeater, provides conditions for expanding a coverage range of a serving cell, but also ensures reliable transmission of information.

It may be understood that the communication apparatus 140 may be a network device, an apparatus in the network device, or an apparatus capable of being used with the network device.

The communication apparatus 140 is on a network device side. The apparatus 140 includes a transceiving module 1402.

The transceiving module 1402 is configured to send a radio resource control (RRC) message to a smart repeater. The RRC message is configured to configure information of a beam corresponding to a service link for the smart repeater.

Optionally, the information of the beam includes at least one of:
an identification (ID) of one group of beams;
a plurality of identifications (ID) of a plurality of groups of beams;
an identification (ID) of one beam;
a plurality of identifications (ID) of a plurality of beams;
a periodicity;
a starting position of the beam; or
a temporal characteristic of the beam.

Optionally, the transceiving module 1402 is further specifically configured to:
send first indication information to the smart repeater. The first indication information is configured to trigger or activate at least one of beams configured by the RRC message.

Optionally, the processing module 1402 is specifically configured to:
in response to sending the first indication information via downlink control information (DCI), determine a time domain position after a first number of time units from sending the DCI as a starting position of the at least one beam;
   or,
in response to sending the first indication information via a media access control (MAC) control element (CE), determine a time domain position after a second number of time units from receiving an acknowledgment signaling sent by the smart repeater as a starting position of the at least one beam.

Optionally, the processing module 1402 is further specifically configured to:
determine a value of the first number of time units or a value of the second number of time units according to a protocol agreement and a type of the at least one beam.

Optionally, the processing module 1402 is further specifically configured to:
in response to a change in a type of the at least one beam, determine that the value of the first number of time units and the value of the second number of time units are greater than or equal to at least one of following items agreed in a protocol:
a signal processing delay;
a frequency domain conversion delay;
an uplink timing advance delay;
an uplink preparation delay;
an antenna switching delay; or
a beam switching delay.

Optionally, the transceiving module 1402 is further specifically configured to:
send second indication information to the smart repeater. The second indication information is configured to indicate a type of a beam used by the smart repeater.

Optionally, the transceiving module 1402 is further specifically configured to:
send third indication information to the smart repeater. The third indication information is configured to indicate one or more beams in the at least one beam triggered or activated by the first indication information.

Optionally, each of the first indication information, the second indication information and the third indication information includes at least one of:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

Optionally, the processing module 1402 is further specifically configured to:
determine a value of a first predefined parameter in the RRC message according to whether a periodicity of a beam to be configured is a periodic beam.

Optionally, the processing module 1402 is further specifically configured to:
determine the value of the first predefined parameter in the RRC message is a first value in response to the beam to be configured being the periodic beam;
or, determine the value of the first predefined parameter in the RRC message is a second value in response to the beam to be configured being a non-periodic beam.

Optionally, the processing module 1402 is further specifically configured to:
determine a value of a second predefined parameter in the RRC message according to whether a starting position of a beam to be configured.

In the communication apparatus provided in the disclosure, the network device may send the RRC message for configuring the information of the beam corresponding to the service link to the smart repeater, such that the smart repeater may communicate with the terminal device based on the configured information of the beam. Therefore, beam transceiving requirements of the smart repeater are achieved to be similar to those of the network device, which not only ensures reliable usage of the smart repeater, provides conditions for expanding a coverage range of a serving cell, but also ensures reliable transmission of the information.

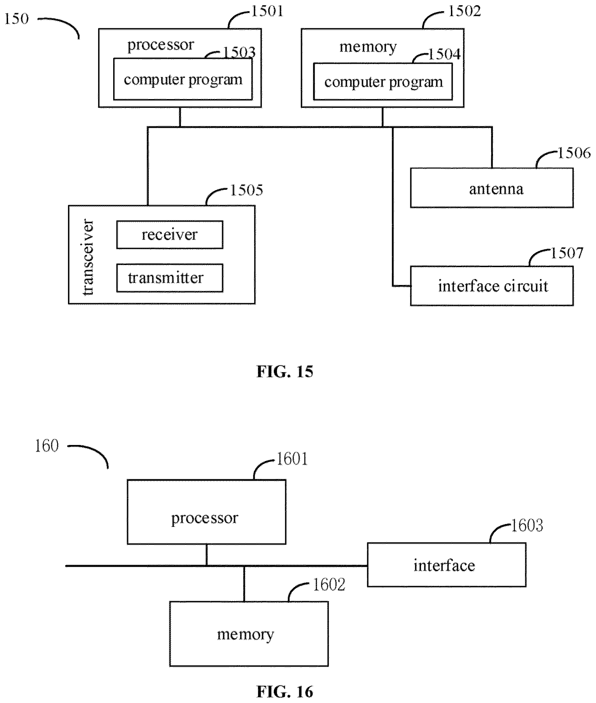

Referring to FIG. 15, FIG. 15 is a structural diagram illustrating another communication apparatus 150 according to embodiments of the present disclosure. The communication apparatus 150 may be a network device, a terminal device, a chip, a system on chip or a processor that supports the network device to implement the method, or a chip, a system on chip or a processor that supports the terminal device to implement the method. The device may be configured to implement the method described in the method embodiments, and may refer to descriptions in the method embodiments.

The communication apparatus 150 may include one or more processors 1501. The processor 1501 may include a general purpose processor or a dedicated processor. For example, the processor may be a baseband processor or a central processor. The baseband processor may be configured to process a communication protocol and communication data, and the central processor may be configured to control a communication apparatus (e.g., a base station, a baseband chip, a terminal device, a terminal device chip, a DU or a CU, etc.), to execute a computer program, and process data of the computer program.

Optionally, the communication apparatus 150 may further include one or more memories 1502 storing a computer program 1504. The processor 1501 executes the computer program 1504 so that the communication apparatus 150 performs the method as described in the above method embodiments. Optionally, the memory 1502 may further store data. The communication apparatus 150 and the memory 1502 may be independently configured or integrated together.

Optionally, the communication apparatus 150 may further include a transceiver 1505 and an antenna 1506. The transceiver 1505 may be referred to as a transceiving unit, a transceiver or a transceiving circuit, which may be configured to achieve a transceving function. The transceiver 1505 may include a receiver and a transmitter. The receiver may be referred to as a receiver or a receiving circuit, etc., for implementing a receiving function; the transmitter may be referred to as a transmitter or a transmission circuit, etc. for implementing a transmitting function.

Optionally, the communication apparatus 150 may further include one or more interface circuits 1507. The interface circuit 1507 is configured to receive code instructions and transmit the code instructions to the processor 1501. The processor 1501 runs the code instructions so that the communication apparatus 150 performs the method according to the above method embodiment.

The communication apparatus 150 is a smart repeater: the processor 1501 is configured to execute step 31 and step 32 in FIG. 3; and step 64 in FIG. 6, etc. The transceiver 1505 is configured to execute step 21 in FIG. 2; execute step 31 in FIG. 3; execute steps 41 and 42 in FIG. 4; or execute step 51, step 52, step 53, etc. in FIG. 5.

The communication apparatus 150 is a network device: the processor 1501 is configured to execute steps 91 and 92 in FIG. 9; step 124 in FIG. 12; and step 134 in FIG. 13. The transceiver 1505 is configured to execute step 81 in FIG. 8; execute step 93 in FIG. 9; and execute step 101, step 102, etc. in FIG. 10.

In an implementation, the processor 1501 may include a transceiver for implementing receiving and transmitting functions. For example, the transceiver may be a transceiving circuit, or an interface, or an interface circuit. The transceiving circuit, the interface or the interface circuit for implementing receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1501 may store a computer program 1503. The computer program 1503 runs on the processor 1501 so that the communication apparatus 150 performs the method as described in the above method embodiments. The computer program 1503 may be solidified in the processor 1501, in which case the processor 1501 may be implemented by hardware.

In an implementation, the communication apparatus 150 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication apparatus described in the above embodiments may be a network device or a terminal device, but the scope of the communication apparatus described in the present disclosure is not limited thereto, and a structure of the communication apparatus may not be subject to FIG. 15. The communication apparatus may be a stand-alone device or may be a part of a larger device. For example, the communication apparatus may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

In the case that the communication apparatus may be a chip or a system on chip, please refer to a diagram of a structure of a chip as illustrated in FIG. 16. The chip 160 illustrated in FIG. 16 may include a processor 1601 and an interface 1602. There may be one or more processors 1601, and there may be a plurality of interfaces 1602.

In the case that the chip is configured to implement a function of a smart repeater in embodiments of the disclosure,
the processor 1601 is configured to execute step 31 and step 32 in FIG. 3; and step 64 in FIG. 6.

The interface 1602 is configured to execute step 21 in FIG. 2; execute step 31 in FIG. 3; execute steps 41 and 42 in FIG. 4; or execute step 51, step 52, step 53, etc. in FIG. 5.

In the case that the chip is configured to implement a function of a network device in embodiments of the disclosure,
the processor 1601 is configured to execute steps 91 and 92 in FIG. 9; step 124 in FIG. 12; or step 134 in FIG. 13, etc.

The interface 1602 is configured to execute step 81 in FIG. 8; execute step 93 in FIG. 9; and execute step 101, step 102, etc. in FIG. 10.

Optionally, the chip further includes a memory 1603. The memory 1603 is configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A communication system is further provided in embodiments of the disclosure. The system includes a communication apparatus serving as a terminal device and a communication apparatus serving as a network device in embodiments of FIG. 14, or the system includes a communication apparatus serving as a terminal device and a communication apparatus serving as a network device in embodiments of FIG. 15.

A computer-readable storage medium storing instructions is further provided in the disclosure. When the instructions are executed, functions of the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, second information may also be referred to as first information. For example, the phrase "on condition that" "if' as used herein may be interpreted as "in a case that" or "when" or "in response to determining" or in case of".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

It may be further understood that, in embodiments of the disclosure, although operations are described in a particular order in attached drawings, it should not be construed as requiring that the operations be performed in a particular or serial order as shown, or that the operations shown be performed in their entirety to obtain a desired result. In a certain environment, multitasking and parallel processing may be advantageous.

After considering the specification and practicing the disclosure here, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of embodiments in the present disclosure are given by the appended claims.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for indicating a beam on a service link of a smart repeater, performed by the smart repeater, the method comprising:
receiving a radio resource control (RRC) message, wherein the RRC message is configured to configure information of a beam corresponding to the service link for the smart repeater.

2. The method according to claim 1, wherein the information of the beam comprises at least one of
an identification (ID) of one group of beams;
a plurality of identifications (ID) of a plurality of groups of beams;
an identification (ID) of one beam;
a plurality of identifications (ID) of a plurality of beams;
a periodicity;
a starting position of the beam; or
a temporal characteristic of the beam.

3. The method according to claim 1, further comprising:
receiving first indication information, wherein the first indication information is configured to trigger or activate at least one of beams configured by the RRC message.

4. The method according to claim 3, further comprising:
in response to receiving the first indication information via downlink control information (DCI), determining a time domain position after a first number of time units from receiving the DCI as a starting position of the at least one beam;
or,
in response to receiving the first indication information via a media access control (MAC) control element (CE), determining a time domain position after a second number of time units from sending an acknowledgment signaling to a network device as a starting position of the at least one beam.

5. The method according to claim 4, further comprising:
in response to a change in a type of the at least one beam, determining that a value of the first number of time units and a value of the second number of time units are greater than or equal to at least one of following items in a protocol agreement:
a signal processing delay;
a frequency domain conversion delay;
an uplink timing advance delay;
an uplink preparation delay;
an antenna switching delay; or
a beam switching delay.

6. The method according to any one of claims 3 to 5, wherein the first indication information comprises at least one of
an identification (ID) of a beam configuration;
a plurality of identifications (ID) of a plurality of groups of beams;
an identification (ID) of one group of beams;
a plurality of identifications (ID) of a plurality of beams; or
an identification (ID) of one beam.

7. A method for indicating a beam on a service link of a smart repeater, performed by a network device, the method comprising:
sending a radio resource control (RRC) message to the smart repeater, wherein the RRC message is configured to configure information of a beam corresponding to the service link for the smart repeater.

8. The method according to claim 7, wherein the information of the beam comprises at least one of
an identification (ID) of one group of beams;
a plurality of identifications (ID) of a plurality of groups of beams;
an identification (ID) of one beam;
a plurality of identifications (ID) of a plurality of beams;
a periodicity;
a starting position of the beam; or
a temporal characteristic of the beam.

9. The method according to claim 7, further comprising:
sending first indication information to the smart repeater, wherein the first indication information is configured to trigger or activate at least one of beams configured by the RRC message.

10. The method according to claim 9, further comprising:
in response to sending the first indication information via downlink control information (DCI), determining a time domain position after a first number of time units from sending the DCI as a starting position of the at least one beam;
or,
in response to sending the first indication information via a media access control (MAC) control element (CE), determining a time domain position after a second number of time units from receiving an acknowledgment signaling sent by the smart repeater as a startingposition of the at least one beam.

11. The method according to claim 10, further comprising:
in response to a change in a type of the at least one beam, determining that a value of the first number of time units and a value of the second number of time units are greater than or equal to at least one of following items in a protocol agreement:
a signal processing delay;
a frequency domain conversion delay;
an uplink timing advance delay;
an uplink preparation delay;
an antenna switching delay; or
a beam switching delay.

12. The method according to any one of claims 9 to 11, wherein the first indication information comprises at least one of:
an identification (ID) of a beam configuration;
a plurality of identifications (ID) of a plurality of groups of beams;
an identification (ID) of one group of beams;
a plurality of identifications (ID) of a plurality of beams; or
an identification (ID) of one beam.

13. A communication apparatus, configured at a smart repeater side, comprising:
a transceiving module, configured to receive a radio resource control (RRC) message, wherein the RRC message is configured to configure information of a beam corresponding to the service link for the smart repeater.

14. The apparatus according to claim 13, wherein the information of the beam comprises at least one of:
an identification (ID) of one group of beams;
a plurality of identifications (ID) of a plurality of groups of beams;
an identification (ID) of one beam;
a plurality of identifications (ID) of a plurality of beams;
a periodicity;
a starting position of the beam; or
a temporal characteristic of the beam.

15. The apparatus according to claim 13, wherein the transceiving module is further specifically configured to:
receive first indication information, wherein the first indication information is configured to trigger or activate at least one of beams configured by the RRC message.

16. The apparatus according to claim 15, further comprising a processing module, specifically configured to:
in response to receiving the first indication information via downlink control information (DCI), determine a time domain position after a first number of time units from receiving the DCI as a starting position of the at least one beam;
or,
in response to receiving the first indication information via a media access control (MAC) control element (CE), determine a time domain position after a second number of time units from sending an acknowledgment signaling to a network device as a starting position of the at least one beam.

17. The apparatus according to claim 16, wherein the processing module is specifically configured to:
in response to a change in a type of the at least one beam, determine that a value of the first number of time units and a value of the second number of time units are greater than or equal to at least one of following items agreed in a protocol:
a signal processing delay;
a frequency domain conversion delay;
an uplink timing advance delay;
an uplink preparation delay;
an antenna switching delay; or
a beam switching delay.

18. The apparatus according to any one of claims 15 to 17, wherein the first indication information comprises at least one of:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

19. A communication apparatus, configured at a network device side, comprising:
a transceiving module, configured to send a radio resource control (RRC) message to a smart repeater, wherein the RRC message is configured to configure information of a beam corresponding to a service link for the smart repeater.

20. The apparatus according to claim 19, wherein the information of the beam comprises at least one of:
an identification (ID) of one group of beams;
a plurality of identifications (ID) of a plurality of groups of beams;
an identification (ID) of one beam;
a plurality of identifications (ID) of a plurality of beams;
a periodicity;
a starting position of the beam; or
a temporal characteristic of the beam.

21. The apparatus according to claim 19, wherein the transceiving module is further specifically configured to:
send first indication information to the smart repeater, wherein the first indication information is configured to trigger or activate at least one of beams configured by the RRC message.

22. The apparatus according to claim 21, further comprising a processing module, specifically configured to:
in response to sending the first indication information via downlink control information (DCI), determine a time domain position after a first number of time units from sending the DCI as a starting position of the at least one beam;
or,
in response to sending the first indication information via a media access control (MAC) control element (CE), determine a time domain position after a second number of time units from receiving an acknowledgment signaling sent by the smart repeater as a starting position of the at least one beam.

23. The apparatus according to claim 22, wherein the processing module is further specifically configured to:
in response to a change in a type of the at least one beam, determine that a value of the first number of time units and a value of the second number of time units are greater than or equal to at least one of following items agreed in a protocol:
a signal processing delay;
a frequency domain conversion delay;
an uplink timing advance delay;
an uplink preparation delay;
an antenna switching delay; or
a beam switching delay.

24. The apparatus according to any one of claims 21 to 23, wherein each of the first indication information, second indication information and third indication information comprises at least one of:
an identification (ID) of a beam configuration;
a plurality of identifications (ID) of a plurality of groups of beams;
an identification (ID) of one group of beams;
a plurality of identifications (ID) of a plurality of beams; or an identification (ID) of one beam.

25. A communication apparatus, comprising a processor and a memory storing a computer program, wherein the processor is configurd to execute the computer program, causing the communication apparatus to perform the method according to any one of claims 1 to 6.

26. A communication apparatus, comprising a processor and a memory storing a computer program, wherein the processor is configurd to execute the computer program, causing the communication apparatus to perform the method according to any one of claims 7 to 12.

27. A communication apparatus, comprising a processor and an interface circuit;
wherein the interface circuit is configured to receive code instructions and transmit the code instructions to the processor; and
the processor is configured to run the code instructions to perform the method according to any one of claims 1 to 6.

28. A communication apparatus, comprising a processor and an interface circuit;
wherein the interface circuit is configured to receive code instructions and transmit the code instructions to the processor; and
the processor is configured to run the code instructions to perform the method according to any one of claims 7 to 12.

29. A computer-readable storage medium storing instructions, wherein when the instructions are executed, the method according to any one of claims 1 to 6 is implemented.

30. A computer-readable storage medium storing instructions, wherein when the instructions are executed, the method according to any one of claims 7 to 12 is implemented.
